# EUROPÄISCHE PATENTSCHRIFT

(11) **EP 0 845 637 B1**
(45) Veröffentlichungstag und Bekanntmachung des Hinweises auf die Patenterteilung: **10.10.2001**
(21) Anmeldenummer: 97120906.9
(22) Anmeldetag: 28.11.1997
(51) Int. Cl.: F23N 5/14

(54) **Verfahren zum Überwachen der Flamme in einem brennstoffbetriebenen Heizgerät**
Method for monitoring of the flame in a heater using a fuel
Procédé de surveillance de la flamme dans un appareil de chauffage utilisant un combustible

(30) Priorität: 29.11.1996 DE 19649473
(43) Veröffentlichungstag der Anmeldung: 03.06.1998
(73) Patentinhaber: WEBASTO THERMOSYSTEME GmbH, D-82131 Stockdorf (DE)
(72) Erfinder: Widemann, Fritz, 81241 München (DE); Dedio, Horst, 82515 Wolfratshausen (DE); Kunz, Stefan, 80796 München (DE)
(74) Vertreter: Wiese, Gerhard

(56) Entgegenhaltungen:
- EP-A- 0 492 670
- EP-A- 0 791 786
- PATENT ABSTRACTS OF JAPAN vol. 011, no. 082 (M-571), 12. März 1987 & JP 61 237919 A (KYOCERA CORP), 23. Oktober 1986

## Beschreibung

Die Erfindung betrifft ein Verfahren zum Überwachen der Flamme im Brenner eines brennstoffbetriebenen Heizgeräts, insbesondere eines Fahrzeugzusatzheizgeräts, mittels eines als Flammwächter betriebenen Glühstifts für das Heizgerät, bei dem der Widerstand des Glühstifts gemessen und das Brennen einer Flamme in Abhängigkeit einer vorgegeben Widerstandsschwelle erkannt wird.

Beispielsweise aus der DE 40 15 097 C1 ist es bekannt, den Glühstift für ein brennstoffbetriebenes Heizgerät auch zur Flammüberwachung einzusetzen. Zu diesem Zweck wird der Widerstand des mit einer getakteten Meß-Spannung angesteuerten Glühstifts während des Brennbetriebs (und damit nicht während der Glühphase) ermittelt und mittels einer Auswerteeinrichtung zur Flammüberwachung dadurch genutzt, daß der aktuelle Widerstandsmeßwert mit einer vorbestimmten Widerstandsschwelle verglichen wird. Sobald der Widerstandsmeßwert unter die Widerstandsschwelle fällt, wird auf einen Flammenabriß bzw. "Flamme aus" erkannt und es werden geeignete Maßnahmen, wie etwa Abschalten der Brennstoffzufuhr, ergriffen. Um zu gewährleisten, daß der Flammabriß durch den zur Flammüberwachung eingesetzten Glühstift sicher erkannt wird, werden die Glühstifte vor ihrem Einbau einer aufwendigen Kontrolle unterworfen.

Durch die sehr hohen (bis zu 500°C) Temperaturen der Brennerbauteile kann nicht unter allen Praxisbedingungen, wie etwa Kälte oder Überhitzung gewährleistet werden, daß mit Hilfe der Widerstandsschwelle sicher zwischen "Flamme ein" und "Flamme aus" unterschieden wird. Das Problem entsteht dadurch, daß nicht nur das Glüh- bzw. Heizelement des Glühstifts 1 durch die Flamme (Nutzsignal) sondern auch die noch im Glühstift verlaufenden Zuleitungen zu dem Heizelement durch die heißen Brennerbauteile erhitzt werden, wodurch das Nutzsignal verfälscht wird.

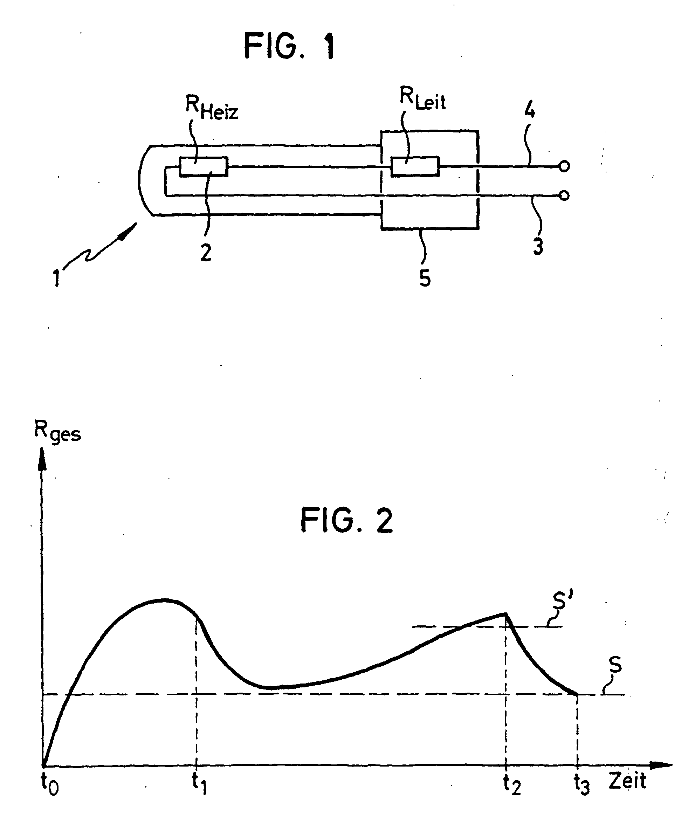

Das angesprochene Problem tritt sowohl bei Glühstiften auf, bei denen das Heizelement, das beispielsweise aus einer Glühwendel besteht, und die Zuleitungen aus demselben Material hergestellt sind und deshalb dieselben Temperaturkoeffizienten aufweisen, wie auch bei Glühstiften, bei denen das Glühelement und die Zuleitungen relativ stark unterschiedliche Widerstandswerte bzw. Temperaturkoeffizienten aufweisen, weil sie aus unterschiedlichen Materialien bestehen. Ein zuletzt genannter, bekannter Glühstift wird weiter unten anhand von Fig. 1 näher erläutert.

Gemäß der EP-A-0 791 786, die ein älteres Recht gemäß Art. 54(3) EPÜ darstellt, wird bei Überwachen der Flamme im Brenner eines brennstoffbeschickten Heizgeräts der Widerstandswert des Glühstifts vor und nach einem vorbestimmten Zeitintervall ermittelt, und der Unterschied zwischen diesen beiden Werten wird mit einem vorbestimmten Schwellenwert verglichen. Der Schwellenwert, d.h. Referenzwert, wird in einem Speicher festgehalten und in einer Vergleichschaltung mit einem Widerstanddifferenzwert verglichen. Die Setzwerte für das vorbestimmte Zeitintervall und den Referenzwiderstandswert können über Eingabeeinrichtungen eingestellt werden.

Über eine fortgesetzte Anpassung der Widerstandsschwelle an den Temperaturverlauf des Glühstiftwiderstands ist in dieser Druckschrift nichts ausgesagt.

Die Figurenbeschreibung wird hier abweichend vom üblichen Aufbau einer Patentanmeldung vorgezogen, da sie für das grundlegende Verständnis unabdingbar ist. Es zeigt:
Fig. 1 eine schematische Darstellung eines Glühstifts, und
Fig. 2 ein Diagramm zur Verdeutlichung des Widerstandsverlaufs eines Glühstifts über der Zeit.

Demnach besteht der Glühstift 1 aus einem Heiz- bzw. Glühelement 2, das im Kopf des Glühstifts 1 angeordnet ist, und aus einer Zuleitung bzw. Zuleitungen 3, 4, die an das Heizelement 2 angeschlossen und am dem Glühstiftkopf gegenüberliegenden Ende aus diesem herausgeführt sind. Im Bereich des zuletzt genannten Endes weist der Glühstift 1 außerdem einen Kontaktring 5 auf, der von den Zuleitungen 3, 4 durchsetzt ist, und der zur Fixierung des Glühstifts 1 in der Brennerwandung eines brennstoffbetriebenen Heizgeräts dient. Der Widerstand des Heizelements 2 ist in Fig. 1 mit R_{Heiz} bezeichnet, während der Widerstand der Zuleitungen 3, 4 schematisch mit dem Ersatzwiderstand R_{Leit} bezeichnet ist.

Die Werte dieser beiden Widerstände sind aufgrund unterschiedlicher Materialien für das Heizelement 2 und die Zuleitungen 3, 4 relativ stark unterschiedlich und die Temperatur am Kontaktring 5, der von den Zuleitungen 3, 4 durchsetzt ist, geht überproportional in den Gesamtwiderstand ein. Dadurch wird der Widerstandsanteil des als Flammwächter eingesetzten Glühstifts 1 zum Temperaturanteil der Brennerbauteile, in welche der Glühstift 1 eingebaut ist, stets relativ kleiner. Die Erkennung eines Flammabrisses dauert damit immer länger, was u.a. einen großen Schadstoffausstoß und einen problematischen Neustart zur Folge hat, wenn der Brenner des Heizgeräts auf die verzögerte Erkennung "Brenner aus" hin "abgesoffen" ist.

Fig. 2 zeigt schematisch anhand eines Diagramms den zeitlichen Widerstandsverlauf des Gesamtwiderstands R_{ges} = R_{Heiz} + R_{Leit} des Glühstifts von Fig. 1 zur Erläuterung des vorstehend angesprochenen Sachverhalts bei der Flammerkennung. Auf der Abszisse des Diagramms von Fig. 2 ist die Zeit aufgetragen, während auf der Ordinate der Glühstift-Gesamtwiderstand aufgetragen ist. Die Widerstandsschwelle S zur Erkennung von "Flamme ein" bzw. "Flamme aus" ist als parallel zur Abszisse verlaufende, strichlierte Linie dargestellt. Im Zeitintervall zwischen t₀ und t₁ steigt der Glühstiftwiderstand aufgrund seines Glühbetriebs an. Zum Zeitpunkt t₁ ist der Glühbetrieb beendet, die Flamme brennt und die Flammwächterauswertung beginnt, wobei der Glühstiftwiderstand aufgrund des Glühendes zunächst bis knapp über die Schwelle S abfällt, um daraufhin aufgrund der aufgenommenen Flammrückwärme wieder anzusteigen. Bei normalem Brennerbetrieb würde der Widerstandswert im anschließenden Intervall (nach t₁) gegen einen konstanten Wert konvergieren. Im dargestellten Fallbeispiel tritt jedoch vor Erreichen dieses konstanten Werts zum Zeitpunkt t₂ ein Flammabriß auf, der aus den vorstehend erläuterten Gründen jedoch erst zu einem späteren Zeitpunkt t₃ durch Unterschreiten der Schwelle S erkannt wird, zu welchem Zeitpunkt der Brenner im ungünstigsten Fall bereits "abgesoffen" ist. Aufgrund der Zeitverzögerung bei der Erkennung "Flamme aus" werden jedenfalls Schadstoffe in einem Ausmaß ausgetragen, das im Pkw-Bereich heutzutage nicht mehr akzeptabel ist.

Der vorliegenden Erfindung liegt die Aufgabe zugrunde, ein Verfahren der im Oberbegriff genannten Art zu schaffen, durch das das Ereignis "Flamme aus" unter allen Betriebsbedingungen rechtzeitig erkannt wird.

Gelöst wird diese Aufgabe durch die kennzeichnenden Merkmale des Patentanspruchs 1. Vorteilhafte Weiterbildungen der Erfindung sind in den Unteransprüchen genannt.

Mit anderen Worten sieht die Erfindung eine Nachführung der Schaltschwelle bzw. der Widerstandsschwelle entsprechend dem aktuellen Glühstift-Widerstandswert vor, wie in Fig. 2 durch die nachgeführte Schwelle S' angedeutet, die z.B. zum Zeitpunkt t₂ des Flammabrisses unmittelbar unterhalb des aktuellen Widerstandswerts liegt und durch den dann abfallenden Widerstandswert kurzfristig unterschritten wird und die rechtzeitige Auswertung "Flamme aus" zur Folge hat.

Um für alle Praxisfälle eine rasche Reaktion bei der Flammerkennung zu gewährleisten, wird die Widerstandsschwelle stets knapp unterhalb des Temperaturverlaufs des Glühstift-Widerstands gehalten.

Die Erfindung sieht eine Reihe von Strategien zur Nachführung der Widerstands-(Schalt-) Schwelle vor. Demnach wird die Widerstandsschwelle beispielsweise beim Kaltstart des Heizgeräts als Funktion der Umgebungstemperatur eingestellt.

Alternativ oder ergänzend kann die Widerstandsschwelle bei relativ zu einer Bezugstemperatur niedriger Umgebungstemperatur abgesenkt und bei relativ zu einer Bezugstemperatur höherer Umgebungstemperatur angehoben werden.

Ferner kann die Widerstandsschwelle abhängig von der Einschaltdauer des Heizgeräts angehoben oder proportional zur Heizleistung des Heizgeräts eingestellt werden.

Die Widerstandsschwelle kann aber auch abhängig vom Gehalt an Schadstoffen im Abgas des Heizgeräts eingestellt werden. Beispielsweise kann demgemäß die Widerstandsschwelle bei hohem CO₂-Gehalt im Abgas auf einen niedrigen Wert und bei niedrigem CO₂-Gehalt im Abgas auf einen hohen Wert eingestellt werden.

Eine weitere alternative oder ergänzende Strategie zur Widerstandsschwellen-Nachführung kann vorsehen, daß die Widerstandsschwelle ausgehend von einem vorgegebenen Anfangswert bei einem Kaltstart des Heizgeräts schrittweise und/oder kontinuierlich bis zu einem vorgegebenen Maximalwert angehoben wird.

## Patentansprüche

1. Verfahren zum Überwachen der Flamme im Brenner eines brennstoffbetriebenen Heizgeräts, insbesondere eines Fahrzeugzusatzheizgeräts, mittels eines als Flammwächter betriebenen Glühstifts für das Heizgerät, bei dem der temperaturabhängige Widerstand des Glühstifts gemessen und das Brennen einer Flamme in Abhängigkeit einer vorgegebenen Widerstandsschwelle erkannt wird,
**dadurch gekennzeichnet, daß** die Widerstandsschwelle an den Temperaturverlauf des Glühstift-Widerstands angepaßt wird.

2. Verfahren nach Anspruch 1, **dadurch gekennzeichnet, daß** die Widerstandsschwelle stets knapp unterhalb des Temperaturverlaufs des Glühstift-Widerstands gehalten wird.

3. Verfahren nach Anspruch 1 oder 2, **dadurch gekennzeichnet, daß** die Widerstandsschwelle beim Kaltstart des Heizgeräts als Funktion der Umgebungstemperatur eingestellt wird.

4. Verfahren nach Anspruch 1, 2 oder 3, **dadurch gekennzeichnet, daß** die Widerstandsschwelle bei relativ zu einer Bezugstemperatur niedriger Umgebungstemperatur abgelenkt und bei relativ zu einer Bezugstemperatur höherer Umgebungstemperatur angehoben wird.

5. Verfahren nach einem der Ansprüche 1 bis 4, **dadurch gekennzeichnet, daß** die Widerstandsschwelle abhängig von der Einschaltdauer des Heizgeräts angehoben wird.

6. Verfahren nach einem der Ansprüche 1 bis 5, **dadurch gekennzeichnet, daß** die Widerstandsschwelle proportional zur Heizleistung des Heizgeräts eingestellt wird.

7. Verfahren nach einem der Ansprüche 1 bis 6, **dadurch gekennzeichnet, daß** die Widerstandsschwelle abhängig vom Gehalt an Schadstoffen im Abgas des Heizgeräts eingestellt wird.

8. Verfahren nach Anspruch 7, **dadurch gekennzeichnet, daß** die Widerstandsschwelle bei hohem CO₂-Gehalt im Abgas auf einen niedrigen Wert und bei niedrigem CO₂-Gehalt im Abgas auf einen hohen Wert eingestellt wird.

9. Verfahren nach einem der Ansprüche 1 bis 8, **dadurch gekennzeichnet, daß** die Widerstandsschwelle ausgehend von einem vorgegebenen Anfangswert bei einem Kaltstart des Heizgeräts schrittweise und/oder kontinuierlich bis zu einem vorgegebenen Maximalwert angehoben wird.

## Claims

1. Method of monitoring the flame in the burner of a fuel-fired heater, in particular an auxiliary heater for a vehicle, by means of a glow plug for the heater operated as a flame detector, in which the temperature-dependent resistance of the glow plug is measured and the burning of a flame is detected as a function of a predetermined resistance threshold, **characterised in that** the resistance threshold is adapted to the temperature profile of the glow plug resistance.

2. Method according to claim 1, **characterised in that** the resistance threshold is always kept just below the temperature profile of the glow plug resistance.

3. Method according to claim 1 or claim 2, **characterised in that** the resistance threshold is set as a function of the ambient temperature upon cold starting of the heater.

4. Method according to claim 1, 2 or 3, **characterised in that** the resistance threshold is reduced when the ambient temperature is low relative to a reference temperature and increased when the ambient temperature is higher relative to a reference temperature.

5. Method according to one of claims 1 to 4, **characterised in that** the resistance threshold is increased as a function of the operating time of the heater.

6. Method according to one of claims 1 to 5, **characterised in that** the resistance threshold is set in proportion to the heat output of the heater.

7. Method according to one of claims 1 to 6, **characterised in that** the resistance threshold is set as a function of the content of harmful substances in the waste gas of the heater.

8. Method according to claim 7, **characterised in that** the resistance threshold is set at a low level when the CO₂ content of the waste gas is high and at a high level when the CO₂ content of the waste gas is low.

9. Method according to one of claims 1 to 8, **characterised in that**, starting from a predetermined initial value upon cold starting of the heater, the resistance threshold is increased gradually and/or continuously to a predetermined maximum value.

## Revendications

1. Procédé de surveillance de la flamme dans un brûleur d'un appareil de chauffage utilisant un combustible, en particulier un chauffage d'appoint pour véhicules automobiles, au moyen d'une bougie à fourreau faisant office de témoin de flamme de l'appareil de chauffage, dans lequel la résistance de la bougie à fourreau est mesurée en fonction de la température et la combustion d'une flamme est identifiée en fonction d'un seuil de résistance prédéterminé, **caractérisé en ce que** le seuil de résistance est adapté à l'évolution de la température de la résistance de la bougie à fourreau.

2. Procédé selon la revendication 1, **caractérisé en ce que** le seuil de résistance est maintenu constamment juste au-dessous de l'évolution de la température de la résistance de la bougie à fourreau.

3. Procédé selon la revendication 1 ou 2, **caractérisé en ce que** le seuif de résistance est réglé lors du démarrage à froid de l'appareil de chauffage comme étant fonction de la température ambiante.

4. Procédé selon la revendication 1, 2 ou 3, **caractérisé en ce que** le seuil de résistance est abaissé à une température ambiante inférieure par rapport à une température de référence et est relevé à une température ambiante supérieure par rapport à une température de référence.

5. Procédé selon l'une des revendications 1 à 4, **caractérisé en ce que** le seuil de résistance est relevé en fonction de la durée d'allumage de l'appareil de chauffage.

6. Procédé selon l'une des revendications 1 à 5, **caractérisé en ce que** le seuil de résistance est réglé proportionnellement à la puissance de chauffage de l'appareil de chauffage.

7. Procédé selon l'une des revendications 1 à 6, **caractérisé en ce que** le seuil de résistance est réglé en fonction de la teneur en substances nocives contenues dans les gaz brûlés de l'appareil de chauffage.

8. Procédé selon la revendication 7, **caractérisé en ce que** le seuil de résistance est réglé sur une valeur basse en cas de teneur élevée en CO₂ dans les gaz brûlés et sur une valeur élevée en cas de faible teneur en CO₂ dans les gaz brûlés.

9. Procédé selon l'une des revendications 1 à 8, **caractérisé en ce que** le seuil de résistance est relevé de façon progressive et/ou continue en partant d'une valeur initiale prédéterminée lors du démarrage à froid de l'appareil de chauffage jusqu'à une valeur maximale prédéterminée.
